(19) Europäisches Patentamt
European Patent Office
Office européen des brevets

(11) **EP 2 987 321 B1**

(12) **FASCICULE DE BREVET EUROPEEN**

(45) Date de publication et mention
de la délivrance du brevet:
**30.05.2018 Bulletin 2018/22**

(21) Numéro de dépôt: **14718066.5**

(22) Date de dépôt: **16.04.2014**

(51) Int Cl.:
*H04N 9/04* *(2006.01)*    *H04N 5/33* *(2006.01)*

(86) Numéro de dépôt international:
**PCT/EP2014/057698**

(87) Numéro de publication internationale:
**WO 2014/170359 (23.10.2014 Gazette 2014/43)**

(54) **DISPOSITIF D'ACQUISITION D'IMAGES BIMODE**

VORRICHTUNG ZUR ERFASSUNG BIMODALER BILDER

DEVICE FOR ACQUIRING BIMODAL IMAGES

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **17.04.2013 FR 1353482**

(43) Date de publication de la demande:
**24.02.2016 Bulletin 2016/08**

(73) Titulaire: **Photonis France
19100 Brive (FR)**

(72) Inventeurs:
• **KAISER, Carlo
9300 Ab Roden (NL)**
• **ROBERT, Franck
19106 Brive Cedex (FR)**
• **LETEXIER, Damien
19106 Brive Cedex (FR)**

(74) Mandataire: **Brevalex
95, rue d'Amsterdam
75378 Paris Cedex 8 (FR)**

(56) Documents cités:
WO-A2-2007/145373    US-A1- 2007 285 540
US-A1- 2009 009 654    US-A1- 2009 159 799
US-A1- 2009 295 973

**Description**

## DOMAINE TECHNIQUE

La présente invention concerne le domaine des dispositifs d'acquisition d'images, et plus particulièrement ceux utilisant des filtres matriciels de couleurs.

## ÉTAT DE LA TECHNIQUE ANTÉRIEURE

La plupart des dispositifs d'acquisition d'images, tels que appareils photo ou vidéo numériques, font appel à un capteur (CCD ou CMOS) constitué par une matrice de capteurs élémentaires photosensibles encore dénommés pixels. L'information de couleur est obtenue grâce à une matrice de filtres élémentaires de couleur ou CFA (*Color Filter Array*) disposée sur la matrice de pixels, de sorte que chaque pixel est recouvert par un filtre élémentaire de la matrice, ne laissant passer qu'une partie du spectre visible.

Les matrices de filtres de couleurs ainsi que les techniques de reconstruction d'images à partir des signaux reçus par les différents pixels, ont fait l'objet d'importantes recherches.

La matrice de filtres de couleurs la plus répandue actuellement est décrite dans le document US-A-3971065 et représentée en Fig. 1.

Cette matrice, dite matrice de Bayer, est obtenue par la répétition périodique d'un motif constitué de quatre filtres élémentaires, à savoir :

$$F_{Bayer} = \begin{pmatrix} G & R \\ B & G \end{pmatrix} \qquad (1)$$

où $G$ est un filtre ne laissant passer que le vert, $R$ est un filtre ne laissant passer que le rouge et $B$ est un filtre ne laissant passer que le bleu. Les pixels situés sous les filtres élémentaires $G, R, B$ sont respectivement dénommés pixels verts, rouges et bleus. On voit que la matrice de Bayer est constituée de 50% de pixels verts, 25% de pixels rouges et 25% de pixels bleus.

L'opération consistant à reconstruire une image couleur à partir de l'intensité reçue par les différents pixels du capteur est dénommée dématriçage (*demosaicking*). Cette opération de dématriçage a été étudiée de manière extensive dans la littérature, par exemple dans l'article de D. Alleyson et al. intitulé « Frequency selection demosaicking : a review and a look-ahead », publié dans Proc. of IS&T/SPIE VCIP, San Jose, CA, Jan. 2008.

D'autres matrices de filtres de couleurs ont été proposées pour améliorer la sensibilité du capteur dans des conditions de faible éclairement. La plupart de ces matrices utilisent des pixels supplémentaires dits pixels blancs, encore appelés pixels transparents, neutres ou panchromatiques. Ils permettent d'obtenir un signal de luminance en sus du signal de chrominance. Des exemples de telles matrices sont donnés dans la demande WO-A-2007/089416.

Une matrice de filtres couramment utilisée pour obtenir une bonne sensibilité dans des conditions de faible éclairement est celle dite de Kodak™, générée par le motif de base :

$$F_{Kodak} = \begin{pmatrix} W & B & W & G \\ B & W & G & W \\ W & G & W & R \\ G & W & R & W \end{pmatrix} \qquad (2)$$

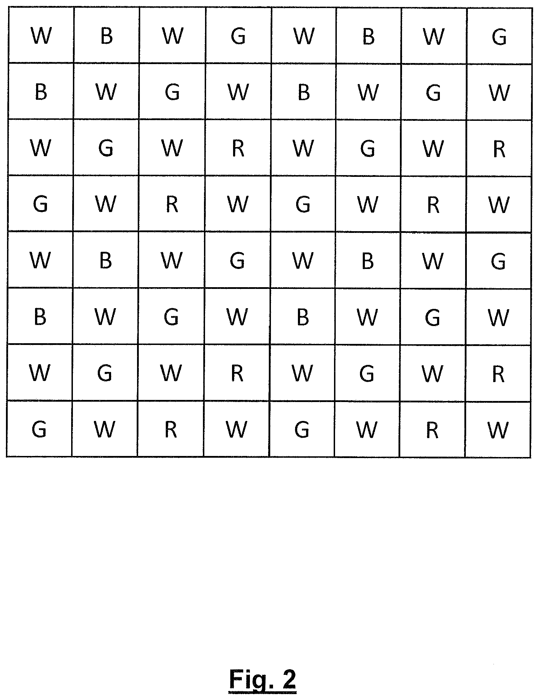

où les éléments $R, G, B$ ont le même sens que précédemment et $W$ désigne un pixel blanc, autrement dit une absence de filtrage chromatique. Cette matrice de filtres est représentée en Fig. 2.

Une première solution simple pour améliorer davantage la sensibilité du capteur dans des conditions de faible éclairement est d'exploiter la réponse du capteur dans le proche infrarouge. Toutefois, la plupart des dispositifs d'acquisition d'images comprennent en entrée un filtre infrarouge (*infrared cut-off filter*), de manière à réduire le bruit en sortie du capteur CCD ou CMOS. En effet, d'une part, les capteurs élémentaires couramment utilisés sont en silicium et par conséquent sensibles au proche infrarouge, et, d'autre part, les filtres élémentaires de couleur placés devant les différents pixels ne permettent pas de bloquer efficacement la partie infrarouge du spectre.

Le document JP-A-2010062604 propose d'utiliser en sus de pixels de couleurs, des pixels infrarouges, les premiers étant utilisés pour la vision de jour et les seconds pour la vision de nuit. Le capteur ne peut donc être protégé dans ce cas par un filtre d'entrée infrarouge. Il en résulte un niveau de bruit important lorsque le capteur fonctionne en vision de jour. Le document US 2009/159799 décrit un dispositif d'acquisition d'images comprenant des moyens de traitement et un capteur d'image matriciel ayant une matrice de filtres élémentaires comprenant des filtres de couleur rouge, bleu et vert, des filtres infrarouges et au moins 50% de filtres panchromatiques.

Le document US 2009/009654 décrit un dispositif d'acquisition d'images comprenant des moyens de traitement et un capteur d'image matriciel ayant une matrice de filtres rouge, bleu, vert ayant un filtre infrarouge superposé sur chacun d'entre eux et des pixels panchromatiques. La luminance est calculée à partir d'une image formée à partir des pixels panchromatiques et, en fonction de la valeur de la luminance, différents poids sont attribués aux signaux provenant des pixels ayant des filtres de couleur primaire dans le procédé d'interpolation. L'objectif de la présente invention est de proposer un système d'acquisition d'images capable de fonctionner en vision de jour comme en vision de nuit, avec un bon rapport signal sur bruit.

## EXPOSÉ DE L'INVENTION

La présente invention est définie par un dispositif d'acquisition d'images selon la revendication 1 comprenant un capteur constitué d'une matrice d'éléments photosensibles, dits pixels, une matrice de filtres élémentaires, recouvrant ledit capteur, chaque filtre élémentaire étant associé à un pixel correspondant, et des moyens de traitement. Ce dispositif est tel que :

- la matrice de filtres élémentaires comprend des filtres de couleurs primaires, un filtre de couleur primaire ne transmettant qu'une couleur primaire, des filtres transmettant l'intégralité du spectre visible, dits filtres panchromatiques, et des filtres infrarouges transmettant le proche infrarouge, les filtres panchromatiques représentant au moins 50% desdits filtres élémentaires ; Le dispositif est particulier en ce que les moyens de traitement sont adaptés à :
- calculer une moyenne de luminance sur un ensemble de pixels panchromatiques pour déterminer si au moins une zone du capteur est dans des conditions de faible ou de fort éclairement ;
- si ladite zone est dans des conditions de faible éclairement, former une image monochrome de ladite zone à partir des pixels panchromatiques ;
- si ladite zone est dans des conditions de fort éclairement, former une image couleur de ladite zone à partir des pixels de couleurs primaires et en retrancher une image infrarouge de ladite zone obtenue à partir des pixels infrarouges.

Avantageusement, l'image monochrome de ladite zone est obtenue au moyen d'une interpolation des pixels panchromatiques appartenant à cette zone.

De manière similaire, l'image couleur de ladite zone est obtenue par combinaison des images de couleurs primaires de ladite zone, une image de couleur primaire étant obtenue au moyen d'une interpolation des pixels de la couleur primaire de ladite zone.

Enfin, l'image infrarouge de ladite zone peut être obtenue au moyen d'une interpolation des pixels infrarouges de ladite zone.

Avantageusement, les filtres panchromatiques représentent au moins 75% des filtres élémentaires.

Selon un premier mode de réalisation avantageux, la matrice de filtres élémentaires est générée par répétition périodique bidimensionnelle du motif suivant :

$$F_{d\&n} = \begin{pmatrix} R & W & G & W \\ W & W & W & W \\ IR & W & B & W \\ W & W & W & W \end{pmatrix}$$

où $F$, $G$, $B$, représentent respectivement des filtres de transmission dans le rouge, le vert et le bleu, $IR$ un filtre infrarouge et $W$ un filtre panchromatique, le motif étant défini à une permutation près de $R$, $G$, $B$, $IR$.

Selon un second mode de réalisation avantageux, la matrice de filtres élémentaires est générée par répétition périodique bidimensionnelle du motif suivant :

$$F_{d\&n} = \begin{pmatrix} Ye & W & Ma & W \\ W & W & W & W \\ IR & W & Cy & W \\ W & W & W & W \end{pmatrix}$$

où *Ye, Ma, Cy* représentent respectivement des filtres de transmission dans le jaune, le magenta et le cyan, *IR* un filtre infrarouge et *W* un filtre panchromatique, le motif étant défini à une permutation près de *Ye, Ma, Cy, IR*.

Selon un troisième mode de réalisation avantageux, la matrice de filtres élémentaires est générée par répétition périodique bidimensionnelle du motif suivant :

$$F_{d\&n} = \begin{pmatrix} W & R & W & G \\ R & W & IR & W \\ W & G & W & B \\ IR & W & B & W \end{pmatrix}$$

où *R, G, B* représentent respectivement des filtres de transmission dans le rouge, le vert et le bleu, *IR* un filtre infrarouge et *W* un filtre panchromatique, le motif étant défini à une permutation près de *R, G, B, IR*.

Selon un quatrième mode de réalisation avantageux, la matrice de filtres élémentaires est générée par répétition périodique bidimensionnelle du motif suivant :

$$F_{d\&n} = \begin{pmatrix} W & Ye & W & Ma \\ Ye & W & IR & W \\ W & Ma & W & Cy \\ IR & W & Cy & W \end{pmatrix}$$

où *Ye, Ma, Cy* représentent respectivement des filtres de transmission dans le jaune, le magenta et le cyan, *IR* un filtre infrarouge et *W* un filtre panchromatique, le motif étant défini à une permutation près de *Ye, Ma, Cy, IR*.

De préférence, les moyens de traitement déterminent que ladite zone est à faible éclairement si la moyenne de la luminance sur l'ensemble des pixels panchromatiques de ladite zone est inférieure à un premier seuil et que ladite zone est à fort éclairement si la moyenne de la luminance sur l'ensemble des pixels panchromatiques de ladite zone est supérieure à un second seuil, le second seuil étant supérieur au premier seuil.

Si la moyenne de la luminance sur l'ensemble des pixels panchromatiques de ladite zone est comprise entre les premier et second seuils, les moyens de traitement peuvent effectuer une combinaison de l'image monochrome et de l'image couleur de ladite zone.

Lorsque la zone du capteur est la totalité du capteur, les moyens de traitement déterminent si le capteur est dans des conditions de faible éclairement ou de fort éclairement.

Alternativement, l'image monochrome du capteur est segmentée en régions homogènes et les moyens de traitement opèrent indépendamment sur chaque zone homogène du capteur.

**BRÈVE DESCRIPTION DES DESSINS**

D'autres caractéristiques et avantages de l'invention apparaîtront à la lecture de modes de réalisation préférentiels de l'invention faite en référence aux figures jointes parmi lesquelles :

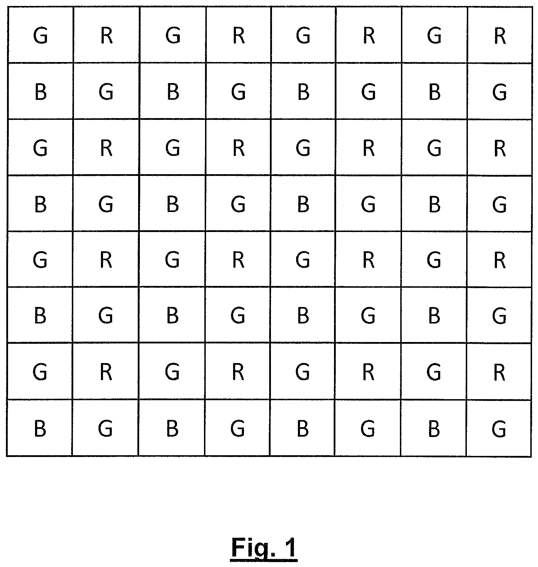

La Fig. 1 représente schématiquement une première matrice de filtres de couleurs connue de l'état de la technique ;
La Fig. 2 représente schématiquement une seconde matrice de filtres de couleurs connue de l'état de la technique ;
La Fig. 3A représente schématiquement un exemple de matrice de filtres pour un dispositif d'acquisition d'images selon un premier exemple de réalisation de l'invention ;
La Fig. 3B représente schématiquement un exemple de matrice de filtres pour un dispositif d'acquisition d'images selon un second exemple de réalisation de l'invention ;

La Fig. 4A représente schématiquement un exemple de matrice de filtres pour un dispositif d'acquisition d'images selon un troisième exemple de réalisation de l'invention ;

La Fig. 4B représente schématiquement un exemple de matrice de filtres pour un dispositif d'acquisition d'images selon un quatrième exemple de réalisation de l'invention ;

La Fig. 5 représente schématiquement le traitement des pixels pour un dispositif d'acquisition d'images selon un premier mode de réalisation de l'invention ;

La Fig. 6 représente schématiquement le traitement des pixels pour un dispositif d'acquisition d'images selon un second mode de réalisation de l'invention.

## EXPOSÉ DÉTAILLÉ DE MODES DE RÉALISATION PARTICULIERS

Nous considérerons à nouveau dans la suite un dispositif d'acquisition d'images comprenant un capteur constitué par une matrice de capteurs élémentaires (CCD ou CMOS) photosensibles, encore dénommés pixels, ainsi qu'une matrice de filtres élémentaires recouvrant le capteur, chaque filtre élémentaire étant associé à un pixel. Plus précisément, chaque filtre élémentaire filtre la lumière incidente pour le pixel associé.

Les filtres élémentaires de la matrice sont des filtres de transmission de trois types différents : filtres de couleur, filtres transparents (ou panchromatiques) et filtres infrarouges.

Les filtres élémentaires de couleur laissent passer un ensemble de couleurs primaires permettant une synthèse additive ou soustractive de toutes les couleurs du spectre visible. Ainsi, les filtres de couleur peuvent être des filtres $R$, $G$, $B$ tels que définis en introduction, dans le cas d'une synthèse additive, ou bien des filtres $Ye, Ma, Cy$ où Ye laisse passer le jaune, $Ma$ le magenta, et $Cy$ le cyan, dans le cas d'une synthèse soustractive. D'autres bases de couleurs primaires peuvent être envisagées par l'homme du métier sans sortir du cadre de la présente invention.

Les filtres élémentaires panchromatiques, laissent passer l'ensemble du spectre visible. Ils peuvent être réalisés en pratique par de simples épargnes dans la matrice ou des filtres transparents (dans le visible). Les pixels situés sous ces filtres élémentaires panchromatiques reçoivent dans ce cas une lumière non filtrée.

Les filtres élémentaires infrarouges ne laissent passer qu'une bande spectrale dans le proche infrarouge, par exemple dans la bande [700nm-1700nm], plus particulièrement dans la bande [700nm-1100nm].

Les filtres élémentaires sont avantageusement arrangés sous la forme d'un motif se répétant de manière périodique, selon deux directions distinctes, généralement orthogonales, dans le plan du capteur.

Les filtres élémentaires peuvent être réalisés en matériau polymère ou bien être des filtres interférentiels, de manière connue en soi.

De préférence, la proportion de filtres élémentaires panchromatiques dans la matrice sera supérieure ou égale à 50%, les autres filtres élémentaires (filtres de couleur et filtres infrarouges) étant répartis en proportions égales. Avantageusement, la proportion de filtres élémentaires panchromatiques sera égale à 75% et les autres filtres élémentaires ayant chacun une proportion de 6.25%.

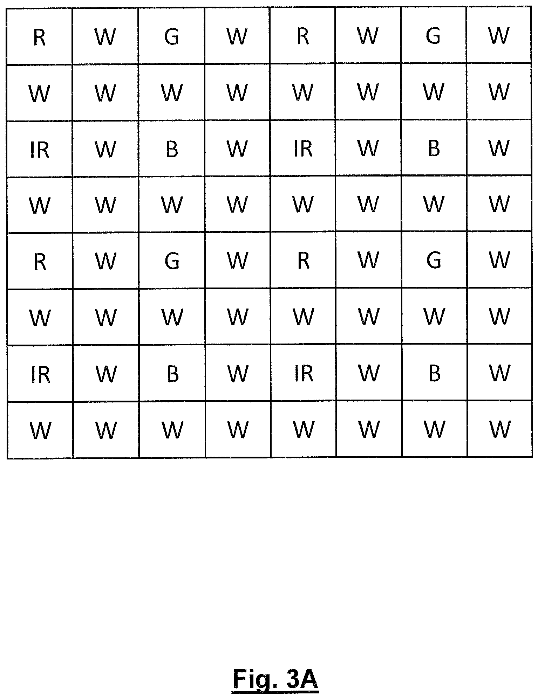

La Fig. 3A représente une matrice de filtres élémentaires pour un système d'acquisition d'images selon un premier exemple de réalisation de l'invention.

A chaque filtre élémentaire correspond un pixel du capteur.

Les filtres élémentaires de couleurs sont ici les filtres $R,$ G, $B.$ Les filtres élémentaires infrarouges sont notés $IR$ et les filtres panchromatiques, $W.$

On remarque que la matrice élémentaire est générée par une répétition périodique bidimensionnelle du motif de base 4 x 4 :

$$F_{d\&n} = \begin{pmatrix} R & W & G & W \\ W & W & W & W \\ IR & W & B & W \\ W & W & W & W \end{pmatrix} \qquad (3)$$

Des variantes de cette matrice peuvent être obtenues par permutation des filtres $R, G, B, IR$ dans le motif (3).

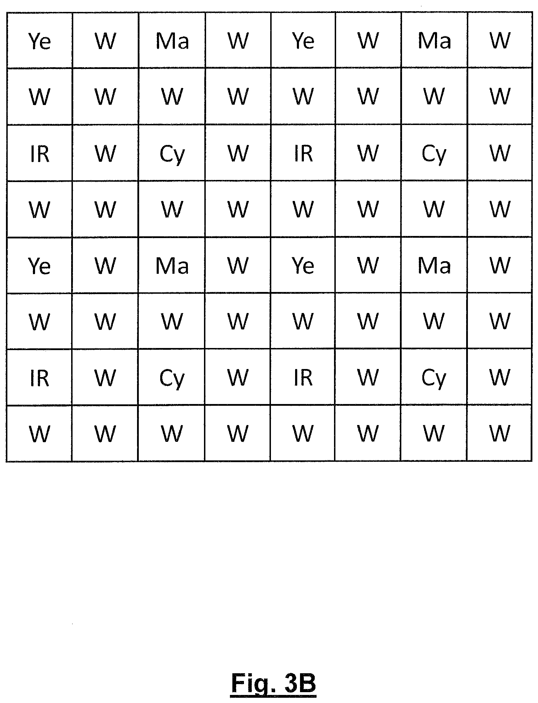

La Fig. 3B représente une matrice de filtres élémentaires pour un système d'acquisition d'images selon un second exemple de réalisation de l'invention.

Les filtres élémentaires de couleur sont ici les filtres $Ye, Ma, Cy$ et le motif de base est alors :

$$F_{d\&n} = \begin{pmatrix} Ye & W & Ma & W \\ W & W & W & W \\ IR & W & Cy & W \\ W & W & W & W \end{pmatrix} \qquad (4)$$

Comme dans le premier exemple, des variantes de cette matrice peuvent être obtenues par permutation des filtres *Ye, Ma, Cy, IR* dans la matrice (4).

Dans les exemples des Figs. 3A et 3B, on notera que la proportion de filtres panchromatiques dans la matrice est de 75% et celle de chacun des filtres de couleur et infrarouge de 6,25%.

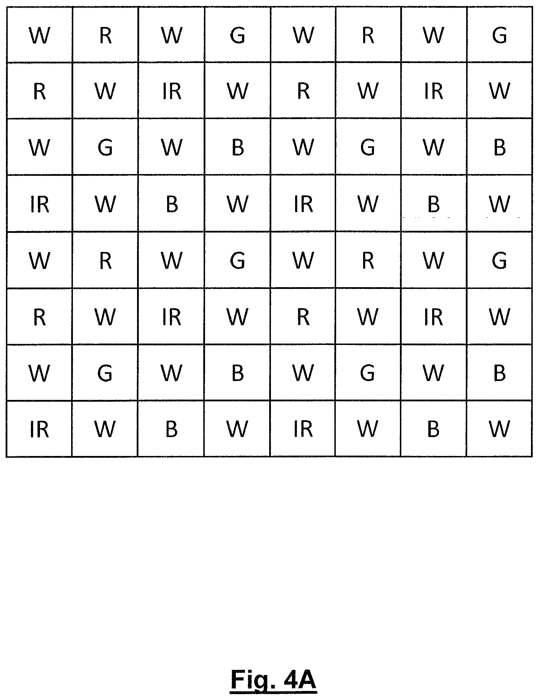

La Fig. 4A représente une matrice de filtres élémentaires pour un système d'acquisition d'images selon un troisième exemple de réalisation de l'invention.

Les filtres élémentaires composant la matrice sont des filtres *R, G, B, IR,* le motif de base étant ici :

$$F_{d\&n} = \begin{pmatrix} W & R & W & G \\ R & W & IR & W \\ W & G & W & B \\ IR & W & B & W \end{pmatrix} \qquad (5)$$

Comme dans le premier exemple, des variantes de cette matrice peuvent être obtenues par permutation des filtres *R, G, B, IR* dans le motif (5).

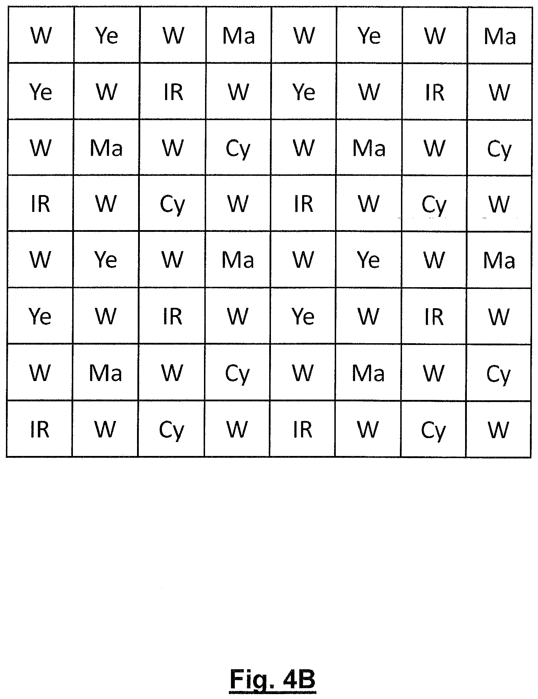

La Fig. 4B représente une matrice de filtres élémentaires pour un système d'acquisition d'images selon un quatrième exemple de réalisation de l'invention.

Les filtres élémentaires composant la matrice sont des filtres *Ye Ma, Cy, IR* et le motif de base est :

$$F_{d\&n} = \begin{pmatrix} W & Ye & W & Ma \\ Ye & W & IR & W \\ W & Ma & W & Cy \\ IR & W & Cy & W \end{pmatrix} \qquad (6)$$

Comme dans le second exemple, des variantes de cette matrice peuvent être obtenues par permutation des filtres *Ye, Ma, Cy, IR* dans le motif (6).

Dans les exemples des Figs. 4A et 4B, on notera que la proportion de filtres panchromatiques dans la matrice n'est que de 50% et celle de chacun des filtres de couleur et infrarouges de 12,5%.

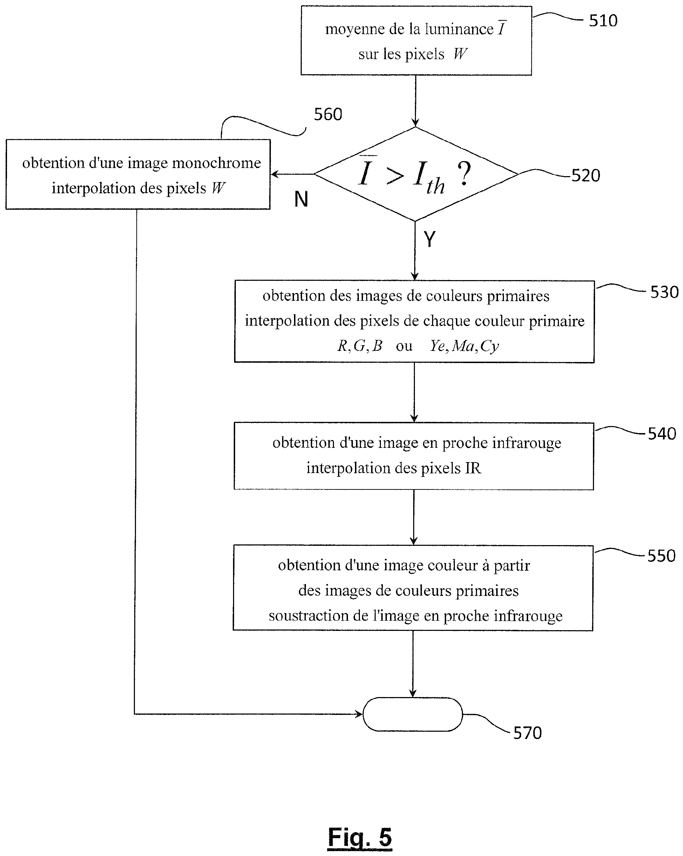

La Fig. 5 représente schématiquement le traitement des pixels dans un dispositif d'acquisition d'images selon un premier mode de réalisation de l'invention.

Dans la suite, on comprendra une opération sur des pixels comme une opération sur les signaux reçus par ces pixels.

Dans une première étape, 510, on estime la moyenne de la luminance $\bar{I}$ de l'image acquise par le dispositif en calculant la moyenne des pixels panchromatiques.

En 520, on compare la moyenne ainsi obtenue à une valeur de seuil prédéterminée, $I_{th}$. Si la moyenne excède ladite valeur de seuil, le dispositif d'acquisition fonctionne en mode diurne (ou fort éclairement), à défaut il fonctionne en mode nocturne (ou faible éclairement).

Si le dispositif d'acquisition fonctionne en mode diurne, on interpole en 530 les pixels de couleur de manière à obtenir une image pour chacune des couleurs primaires, *R, G, B* ou *Ye, Ma, Cy.* Plus précisément, comme on l'a vu plus haut la proportion de pixels d'une couleur donnée étant relativement faible, on obtient la valeur des pixels manquants par interpolation des pixels voisins présents dans la matrice. Par exemple, en référence avec la Fig. 3A, le pixel bleu 310 étant manquant (puisque situé sous un filtre élémentaire rouge), il est obtenu par une interpolation entre les quatre pixels bleus avoisinants 311, 312, 313, 314.

Les images de couleurs primaires peuvent faire l'objet d'un traitement optionnel pour améliorer leur netteté (*image sharpening*). Par exemple, on peut obtenir une image monochrome en interpolant les pixels panchromatiques et combiner cette image monochrome, le cas échéant après filtrage passe-haut, avec chaque image de couleur primaire. La proportion de pixels panchromatiques dans la matrice étant plus élevée que celle des pixels de couleur, la résolution des images de couleurs primaires s'en trouve ainsi améliorée.

A l'étape 540, on obtient une image en proche infrarouge par interpolation entre les pixels infrarouges de la matrice, selon le même principe que celui décrit précédemment pour les pixels de couleur.

A l'étape 550, on ajoute les images de couleurs primaires (pour une synthèse additive) pour obtenir une image de couleur et lui soustrait l'image infrarouge, pixel par pixel. De manière plus générale on combine les images de couleurs primaires pour obtenir une image de couleur. La soustraction de l'image infrarouge permet d'améliorer considérablement le rapport signal sur bruit. Le cas échéant, pour éviter les problèmes de saturation, on soustrait l'image infrarouge pondérée par des facteurs de pondération (similaires ou identiques) à chacune des images de couleurs primaires pour obtenir des images de couleurs primaires débruitées, avant de les sommer (ou plus généralement de les combiner). L'image résultante peut être alors affichée ou stockée dans une mémoire pour un traitement ultérieur.

L'étape 560 correspond à un fonctionnement en mode nocturne (ou sous faible éclairement).

Dans ce mode, on obtient une image monochrome par interpolation des pixels panchromatiques. Ceux-ci étant majoritaires dans la matrice, on obtient un degré de résolution élevé. Cette image peut être affichée ou stockée dans une mémoire pour un traitement ultérieur.

Dans tous les cas, le traitement se termine en 570.

On comprend que le traitement des pixels exposé ci-dessus est très différent selon que le dispositif d'acquisition d'images opère en mode diurne ou en mode nocturne, le basculement d'un mode à l'autre se faisant par comparaison de la luminance moyenne avec un seuil prédéterminé.

Selon une première variante de ce mode de réalisation, le basculement d'un mode à l'autre opère avec hystérésis de manière à éviter tout bruit de commutation (*chattering*). Pour ce faire, un premier seuil de luminance est prévu pour la transition du mode diurne vers le mode nocturne et un second seuil de luminance est prévu pour la transition inverse, le premier seuil étant choisi inférieur au second seuil.

Selon une seconde variante du premier mode de réalisation, le basculement d'un mode à l'autre se fait progressivement en passant par une phase de transition. Ainsi, le dispositif d'acquisition d'images fonctionne en mode nocturne lorsque la luminance moyenne est inférieure à un premier seuil et en mode diurne lorsqu'elle est supérieure à un second seuil, le second seuil étant choisi supérieur au premier seuil. Lorsque la luminance moyenne est comprise entre les premier et second seuils, le dispositif d'acquisition d'images effectue une combinaison linéaire de l'image obtenue par le traitement en mode diurne et de celle obtenue par le traitement en mode nocturne, les coefficients de pondération étant donnés par les écarts de la luminance moyenne avec les premier et second seuils respectivement.

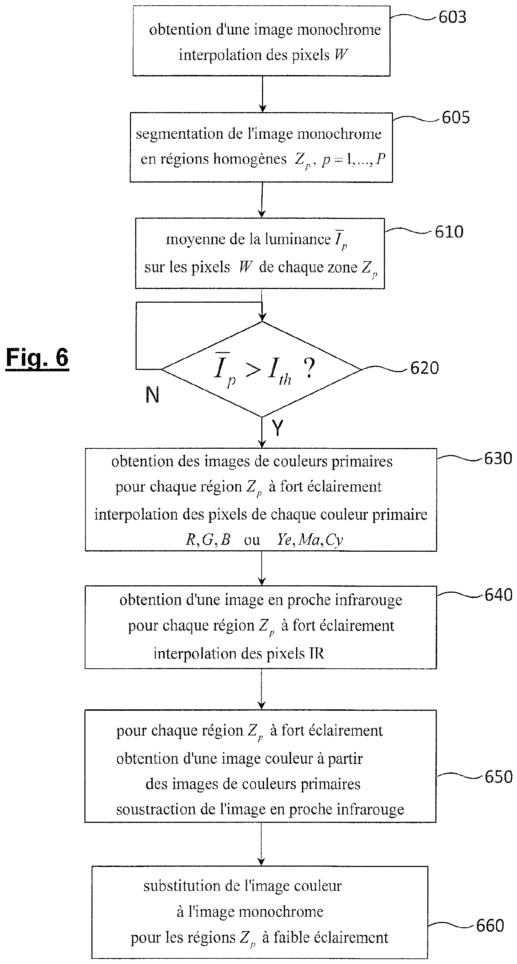

La Fig. 6 représente schématiquement le traitement des pixels dans un dispositif d'acquisition d'images selon un second mode de réalisation de l'invention.

A la différence du premier mode de réalisation, le basculement entre le mode diurne (ou de fort éclairement) et le mode nocturne (ou de faible éclairement) opère sur des régions homogènes d'une image acquise, chaque région homogène étant traitée indépendamment.

A l'étape 603, on obtient une image monochrome en interpolant les pixels panchromatiques. Plus précisément, pour chaque pixel panchromatique manquant de la matrice (par exemple pixel de couleur ou infrarouge) on calcule une intensité à partir des pixels panchromatiques avoisinants.

A l'étape 605, on segmente l'image monochrome ainsi obtenue en régions homogènes. On pourra utiliser à cet effet une technique de segmentation connue de l'état de la technique, telle que décrite par exemple dans l'article de S. Tripathi et al. intitulé « Image Segmentation : a review » publié dans International Journal of Computer Science and Management Research, vol. 1, N° 4, nov. 2012, pp. 838-843. On obtient ainsi P régions homogènes.

A l'étape 610, on calcule la moyenne de la luminance, notée $\overline{I}_p$, pour chacune des régions $Z_p$, $p=1,..., P$.

A l'étape 620, on compare les moyennes de luminances ainsi obtenues à une valeur de seuil prédéterminée. Si la moyenne $\overline{I}_p$ excède ladite valeur de seuil, la région $Z_p$ est considérée comme à fort éclairement. A l'inverse, si la moyenne $\overline{I}_p$ est inférieure à ladite valeur de seuil, la région $Z_p$ est considérée comme à faible éclairement.

Il est important de noter que, pour une zone donnée, la distinction entre faible éclairement et fort éclairement repose sur la moyenne de la luminance, telle qu'obtenue à partir des pixels panchromatiques. Autrement, dit la moyenne de la luminance est obtenue sur la totalité du spectre.

A l'étape 630, on traite les régions à fort éclairement. Pour chaque région à fort éclairement, on interpole les pixels de couleurs appartenant à cette région de manière à obtenir une image de cette région pour chacune des couleurs primaires, *R, G, B* ou *Ye Ma, Cy.*

A l'étape 640, on obtient une image en proche infrarouge de chaque région à fort éclairement, en interpolant les pixels infrarouges appartenant à cette région.

A l'étape 650, on combine pour chaque région à fort éclairement, les images de couleurs primaires (simple sommation dans le cas d'une synthèse additive) et l'on soustrait l'image infrarouge, pixel par pixel. On obtient ainsi des pixels de couleur formant une image couleur pour chaque région à fort éclairement.

A l'étape 660, on remplace dans l'image monochrome obtenue à l'étape 603, les pixels panchromatiques des régions à fort éclairement par les pixels de couleur obtenus à l'étape 650. Alternativement, pour chaque pixel appartenant à une région à fort éclairement, on effectue une combinaison linéaire du pixel panchromatique (autrement dit du pixel de l'image monochrome) et du pixel de couleur obtenu à l'étape 650. On superpose ainsi pour les régions à faible éclairement, l'image monochrome (obtenue à l'étape 603) et l'image couleur (obtenue à l'étape 650).

Comme dans le premier mode de réalisation, on peut prévoir, dans une première variante, d'utiliser deux seuils distincts, un premier seuil pour détecter lorsqu'une région passe d'un niveau de faible éclairement à un niveau de fort éclairement, et un second seuil pour détecter lorsqu'une région passe d'un niveau de fort éclairement à un niveau de faible éclairement, le premier seuil étant inférieur au second.

En outre, on peut également prévoir, dans une seconde variante, une phase de transition entre les deux seuils. Autrement dit, en deçà du premier seuil la région est représentée en mode monochrome par interpolation des pixels panchromatiques, au delà du second seuil la région est représentée en couleur et entre les deux seuils la région peut être représentée par une combinaison linéaire de l'image monochrome et de l'image couleur.

On comprend ainsi que l'on dispose d'un dispositif d'acquisition d'images capable de fonctionner indépendamment des conditions d'éclairement tout en présentant un très bon rapport signal sur bruit.

Selon une autre variante non représentée du second mode de réalisation, lorsqu'une zone a été déterminée comme étant à faible éclairement par le test 620, on détermine si l'intensité des pixels infrarouges appartenant à cette zone est supérieure à un seuil IR prédéterminé. Les pixels infrarouges dont l'intensité est supérieure au seuil IR sont alors représentés en fausses couleurs en superposition avec l'image monochrome de la zone. Ainsi, si une sous-zone de la zone à faible éclairement présente une forte intensité dans le domaine infrarouge, celle-ci sera aisément identifiable dans l'image monochrome de la zone en question. Alternativement encore, le critère de basculement entre représention monochrome et représentation en fausses couleurs pourra se faire par sous-zones homogènes de la zone à faible éclairement. Dans ce cas, une segmentation de la zone à faible éclairement est d'abord effectuée sur la base des pixels infrarouges, après interpolation, selon le même principe que celui déjà décrit en relation avec les étapes 603 et 605. Pour chaque sous-zone homogène au sens précédent, on calcule alors la moyenne de l'intensité des pixels infrarouges dans cette sous-zone et on la compare au seuil IR précité. Lorsque cette moyenne est supérieure au seuil IR, la sous-zone est représentée en fausses couleurs, superposée à l'image monochrome de la zone. L'image en fausses couleurs de la sous-zone est obtenue au moyen d'une interpolation des pixels infrarouges dans cette sous-zone. On comprend ainsi que, dans ce cas, l'image de la zone à faible éclairement mais présentant des sous-zones à forte intensité infrarouge, est obtenue à l'aide d'une combinaison des pixels panchromatiques (partie monochrome) et des pixels infrarouges (partie en fausses couleurs) à l'exclusion des pixels de couleurs élémentaires (RGB) ou (Cyan, Magenta, Jaune).

## Revendications

1. Dispositif d'acquisition d'images comprenant un capteur constitué d'une matrice d'éléments photosensibles, dits pixels, une matrice de filtres élémentaires, recouvrant ledit capteur, chaque filtre élémentaire étant associé à un pixel correspondant, et des moyens de traitement, le dispositif d'acquisition d'images étant tel que:

   - la matrice de filtres élémentaires comprend des filtres de couleurs primaires, un filtre de couleur primaire ne transmettant qu'une couleur primaire, des filtres transmettant l'intégralité du spectre visible, dits filtres panchromatiques, et des filtres infrarouges transmettant le proche infrarouge, les filtres panchromatiques représentant au moins 50% desdits filtres élémentaires ; le dispositif d'acquisition d'images étant **caractérisé en ce que** les moyens de traitement sont adaptés à :

      - calculer une moyenne de luminance sur un ensemble de pixels panchromatiques pour déterminer si au moins une zone du capteur est dans des conditions de faible ou de fort éclairement ;
      - si ladite zone est dans des conditions de faible éclairement, former une image monochrome de ladite zone à partir des pixels panchromatiques ;
      - si ladite zone est dans des conditions de fort éclairement, former une image couleur de ladite zone à partir des pixels de couleurs primaires et en retrancher une image infrarouge de ladite zone obtenue à partir des pixels infrarouges.

2. Dispositif d'acquisition d'images selon la revendication 1, **caractérisé en ce que en ce que** l'image monochrome de ladite zone est obtenue au moyen d'une interpolation des pixels panchromatiques appartenant à cette zone.

3. Dispositif d'acquisition d'images selon la revendication 1, **caractérisé en ce que** l'image couleur de ladite zone est obtenue par combinaison des images de couleurs primaires de ladite zone, une image de couleur primaire étant obtenue au moyen d'une interpolation des pixels de la couleur primaire de ladite zone.

4. Dispositif d'acquisition d'images selon la revendication 1, **caractérisé en ce que** l'image infrarouge de ladite zone est obtenue au moyen d'une interpolation des pixels infrarouges de ladite zone.

5. Dispositif d'acquisition d'images selon l'une des revendications précédentes, **caractérisé en ce que** les filtres panchromatiques représentant au moins 75% des filtres élémentaires.

6. Dispositif d'acquisition d'images selon la revendication 5, **caractérisé en ce que** la matrice de filtres élémentaires est générée par répétition périodique bidimensionnelle du motif suivant :

$$F_{d\&n} = \begin{pmatrix} R & W & G & W \\ W & W & W & W \\ IR & W & B & W \\ W & W & W & W \end{pmatrix}$$

où $R, G, B$ représentent respectivement des filtres de transmission dans le rouge, le vert et le bleu, $IR$ un filtre infrarouge et $W$ un filtre panchromatique, le motif étant défini à une permutation près de $R, G, B, IR$.

7. Dispositif d'acquisition d'images selon la revendication 5, **caractérisé en ce que** la matrice de filtres élémentaires est générée par répétition périodique bidimensionnelle du motif suivant :

$$F_{d\&n} = \begin{pmatrix} Ye & W & Ma & W \\ W & W & W & W \\ IR & W & Cy & W \\ W & W & W & W \end{pmatrix}$$

où $Ye, Ma, Cy$ représentent respectivement des filtres de transmission dans le jaune, le magenta et le cyan, $IR$ un filtre infrarouge et $W$ un filtre panchromatique, le motif étant défini à une permutation près de $Ye, Ma, Cy, IR$.

8. Dispositif d'acquisition d'images selon l'une des revendications 1 à 4, **caractérisé en ce que** la matrice de filtres élémentaires est générée par répétition périodique bidimensionnelle du motif suivant :

$$F_{d\&n} = \begin{pmatrix} W & R & W & G \\ R & W & IR & W \\ W & G & W & B \\ IR & W & B & W \end{pmatrix}$$

où $R, G, B$ représentent respectivement des filtres de transmission dans le rouge, le vert et le bleu, $IR$ un filtre infrarouge et $W$ un filtre panchromatique, le motif étant défini à une permutation près de $R, G, B, IR$.

9. Dispositif d'acquisition d'images selon l'une des revendications 1 à 4, **caractérisé en ce que** la matrice de filtres élémentaires est générée par répétition périodique bidimensionnelle du motif suivant :

$$F_{d\&n} = \begin{pmatrix} W & Ye & W & Ma \\ Ye & W & IR & W \\ W & Ma & W & Cy \\ IR & W & Cy & W \end{pmatrix}$$

où *Ye, Ma, Cy* représentent respectivement des filtres de transmission dans le jaune, le magenta et le cyan, *IR* un filtre infrarouge et *W* un filtre panchromatique, le motif étant défini à une permutation près de *Ye, Ma, Cy, IR.*

**10.** Dispositif d'acquisition d'images selon l'une des revendications précédentes, **caractérisé en ce que** les moyens de traitement déterminent que ladite zone est à faible éclairement si la moyenne de la luminance sur l'ensemble des pixels panchromatiques de ladite zone est inférieur à un premier seuil et que ladite zone est à fort éclairement si la moyenne de la luminance sur l'ensemble des pixels panchromatiques de ladite zone est supérieur à un second seuil, le second seuil étant supérieur au premier seuil.

**11.** Dispositif d'acquisition d'images selon la revendication 10, **caractérisé en ce que** si la moyenne de la luminance sur l'ensemble des pixels panchromatiques de ladite zone est comprise entre les premier et second seuils, les moyens de traitement effectue une combinaison de l'image monochrome et de l'image couleur de ladite zone.

**12.** Dispositif d'acquisition d'images selon l'une des revendications précédentes, **caractérisé en ce que** la zone du capteur est la totalité du capteur, les moyens de traitement déterminent si le capteur est dans des conditions de faible éclairement ou de fort éclairement.

**13.** Dispositif d'acquisition d'images selon l'une des revendications 1 à 11, **caractérisé en ce que** l'image monochrome du capteur est segmentée en régions homogènes et que les moyens de traitement opèrent indépendamment sur chaque zone homogène du capteur.

**14.** Dispositif d'acquisition d'images selon l'une des revendications précédentes, **caractérisé en ce que** lorsqu'une zone est dans des conditions de faible éclairement, on teste si les pixels infrarouges appartenant à cette zone ont une intensité supérieure à un seuil IR prédéterminé et dans l'affirmative on superpose à l'image monochrome de cette zone les pixels infrarouges représentés en fausses couleurs.

**15.** Dispositif d'acquisition d'images selon l'une des revendications 1 à 13, **caractérisé en ce que** lorsqu'une zone est dans des conditions de faible éclairement, on identifie des sous-zones de cette zone, présentant une intensité homogène dans le spectre infrarouge, et l'on détermine, pour chaque sous-zone ainsi identifiée, si la moyenne de l'intensité infrarouge dans cette sous-zone est supérieure à un seuil IR prédéterminé et, dans l'affirmative, on représente cette sous-zone par une image en fausses couleurs sur la base des pixels infrarouges de cette sous-zone, l'image en fausses couleurs de ladite sous-zone étant alors représentée en superposition avec l'image monochrome de la zone à laquelle elle appartient.

**16.** Dispositif d'acquisition d'images selon l'une des revendications 1 à 15, **caractérisé en ce que** l'image en fausses couleurs de ladite sous-zone est obtenue à partir d'une interpolation des pixels infrarouges appartenant à cette sous-zone.

**17.** Dispositif d'acquisition d'images selon l'une des revendications 1 à 16, **caractérisé en ce que** les filtres infrarouges transmettent la bande 700nm-1100nm.

**18.** Dispositif d'acquisition d'images selon l'une des revendications 1 à 16, **caractérisé en ce que** les filtres infrarouges transmettent la bande 700nm-1700nm.

**Patentansprüche**

**1.** Vorrichtung zur Erfassung von Bildern, umfassend einen Sensor, der gebildet ist mit einer Matrix von fotoempfindlichen Elementen, genannt Pixel, mit einer Matrix von Elementarfiltern, die den Sensor bedecken, wobei jedes Elementarfilter einem entsprechenden Pixel zugeordnet ist, sowie mit Verarbeitungsmitteln, wobei die Vorrichtung zur Erfassung von Bildern derart ausgelegt ist, dass:

- die Matrix von Elementarfiltern Primärfarbfilter umfasst, wobei ein Primärfarbfilter nur eine Primärfarbe transmittiert, ferner Filter, die das gesamte sichtbare Spektrum transmittieren, genannt panchromatische Filter, sowie Infrarotfilter, die das nahe Infrarot transmittieren, wobei die panchromatischen Filter wenigstens 50% der Elementarfilter repräsentieren;

wobei die Vorrichtung zur Erfassung von Bildern **dadurch gekennzeichnet ist, dass** die Verarbeitungsmittel dazu ausgelegt sind:

- einen Luminanzmittelwert über eine Gesamtheit von panchromatischen Pixeln zu berechnen, um zu bestimmen, ob wenigstens eine Zone des Sensors sich in einem Zustand schwacher oder starker Beleuchtung befindet;
- wenn die Zone in einem Zustand schwacher Beleuchtung ist, ein monochromes Bild der Zone ausgehend von den panchromatischen Pixeln zu bilden;
- wenn die Zone in einem Zustand starker Beleuchtung ist, ein Farbbild der Zone ausgehend von den Primärfarbpixeln zu bilden und hiervon ein Infrarotbild der Zone abzuziehen, das ausgehend von den Infrarotpixeln erhalten ist.

2. Vorrichtung zur Erfassung von Bildern nach Anspruch 1, **dadurch gekennzeichnet, dass** das Monochrombild der Zone mittels einer Interpolation der panchromatischen Pixel erhalten ist, die zu dieser Zone gehören.

3. Vorrichtung zur Erfassung Bildern nach Anspruch 1, **dadurch gekennzeichnet, dass** das Farbbild der Zone durch Kombination der Primärfarbbilder der Zone erhalten ist, wobei ein Primärfarbbild mittels einer Interpolation der Primärfarbpixel der Zone erhalten ist.

4. Vorrichtung zur Erfassung von Bildern nach Anspruch 1, **dadurch gekennzeichnet, dass** das Infrarotbild der Zone mittels einer Interpolation der Infrarotpixel der Zone erhalten ist.

5. Vorrichtung zur Erfassung von Bildern nach einem der vorhergehenden Ansprüche, **dadurch gekennzeichnet, dass** die panchromatischen Filter wenigstens 75% der Elementarfilter repräsentieren.

6. Vorrichtung zur Erfassung von Bildern nach Anspruch 5, **dadurch gekennzeichnet, dass** die Matrix der Elementarfilter durch periodische zweidimensionale Wiederholung des folgenden Motivs erzeugt ist:

$$F_{d\&n} = \begin{pmatrix} R & W & G & W \\ W & W & W & W \\ IR & W & B & W \\ W & W & W & W \end{pmatrix}$$

wobei *R, G, B* die Transmissionsfilter für Rot, Grün beziehungsweise Blau repräsentieren, *IR* ein Infrarotfilter und W ein panchromatisches Filter, wobei das Motiv bis auf eine Permutation *von R, G, B, IR* definiert ist.

7. Vorrichtung zur Erfassung von Bildern nach Anspruch 5, **dadurch gekennzeichnet, dass** die Matrix der Elementarfilter durch periodische zweidimensionale Wiederholung des folgenden Motivs erzeugt ist:

$$F_{d\&n} = \begin{pmatrix} Ye & W & Ma & W \\ W & W & W & W \\ IR & W & Cy & W \\ W & W & W & W \end{pmatrix}$$

wobei *Ye, Ma, Cy* die Transmissionsfilter für Gelb, Magenta beziehungsweise Cyan repräsentieren, *IR* ein Infrarotfilter und W ein panchromatisches Filter, wobei das Motiv bis auf eine Permutation von *Ye, Ma, Cy, IR* definiert ist.

8. Vorrichtung zur Erfassung von Bildern nach einem der Ansprüche 1 bis 4, **dadurch gekennzeichnet, dass** die Matrix der Elementarfilter durch periodische zweidimensionale Wiederholung des folgenden Motivs erzeugt ist:

$$F_{d\&n} = \begin{pmatrix} W & R & W & G \\ R & W & IR & W \\ W & G & W & B \\ IR & W & B & W \end{pmatrix}$$

wobei *R, G, B* die Transmissionsfilter für Rot, Grün beziehungsweise Blau repräsentieren, *IR* ein Infrarotfilter und W ein panchromatisches Filter, wobei das Motiv bis auf eine Permutation von *R, G, B, IR* definiert ist.

9. Vorrichtung zur Erfassung von Bildern nach einem der Ansprüche 1 bis 4, **dadurch gekennzeichnet, dass** die Matrix der Elementarfilter durch periodische zweidimensionale Wiederholung des folgenden Motivs erzeugt ist:

$$F_{d\&n} = \begin{pmatrix} W & Ye & W & Ma \\ Ye & W & IR & W \\ W & Ma & W & Cy \\ IR & W & Cy & W \end{pmatrix}$$

wobei *Ye, Ma, Cy* die Transmissionsfilter für Gelb, Magenta beziehungsweise Cyan repräsentieren, *IR* ein Infrarotfilter und W ein panchromatisches Filter, wobei das Motiv bis auf eine Permutation von *Ye, Ma, Cy, IR* definiert ist.

10. Vorrichtung zur Erfassung von Bildern nach einem der vorhergehenden Ansprüche, **dadurch gekennzeichnet, dass** die Verarbeitungsmittel bestimmen, dass die Zone bei schwacher Beleuchtung ist, wenn der Mittelwert der Luminanz über die Gesamtheit der panchromatischen Pixel der Zone kleiner ist als eine erste Schwelle, und dass die Zone bei starker Beleuchtung ist, wenn der Mittelwert der Luminanz über die Gesamtheit der panchromatischen Pixel der Zone größer als eine zweite Schwelle ist, wobei die zweite Schwelle größer als die erste Schwelle ist.

11. Vorrichtung zur Erfassung von Bildern nach Anspruch 10, **dadurch gekennzeichnet, dass** dann, wenn der Mittelwert der Luminanz über die Gesamtheit der panchromatischen Pixel der Zone zwischen der ersten und der zweiten Schwelle enthalten ist, die Verarbeitungsmittel eine Kombination des Monochrombilds und des Farbbilds der Zone durchführen.

12. Vorrichtung zur Erfassung von Bildern nach einem der vorhergehenden Ansprüche, **dadurch gekennzeichnet, dass** die Zone des Sensors die Gesamtheit des Sensors ist, und dass die Verarbeitungsmittel bestimmen, ob der Sensor in einem Zustand schwacher Beleuchtung oder starker Beleuchtung ist.

13. Vorrichtung zur Erfassung von Bildern nach einem der Ansprüche 1 bis 11, **dadurch gekennzeichnet, dass** das monochrome Bild des Sensors in homogene Regionen segmentiert ist, und dass die Verarbeitungsmittel unabhängig in jeder homogenen Zone des Sensors arbeiten.

14. Vorrichtung zur Erfassung von Bildern nach einem der vorhergehenden Ansprüche, **dadurch gekennzeichnet, dass** dann, wenn eine Zone in einem Zustand schwacher Beleuchtung ist, man testet, ob die zu dieser Zone gehörenden Infrarotpixel eine Intensität größer als eine vorbestimmte IR-Schwelle haben, und man bejahendenfalls dem monochromen Bild dieser Zone die in Falschfarben repräsentierten Infrarotpixel überlagert.

15. Vorrichtung zur Erfassung von Bildern nach einem der Ansprüche 1 bis 13, **dadurch gekennzeichnet, dass** dann, wenn eine Zone in einem Zustand schwacher Beleuchtung ist, man Unterzonen dieser Zone identifiziert, die eine homogene Intensität im Infrarotspektrum aufweisen, und man für jede derart identifizierte Unterzone bestimmt, ob der Mittelwert der Infrarotintensität in dieser Unterzone größer als eine vorbestimmte IR-Schwelle ist, und man bejahendenfalls diese Unterzone durch ein Bild in Falschfarben auf Basis der Infrarotpixel dieser Unterzone repräsentiert, wobei das Falschfarbenbild der Unterzone dann in Überlagerung mit dem monochromen Bild der Zone repräsentiert wird, zu der sie gehört.

**16.** Vorrichtung zur Erfassung von Bildern nach einem der Ansprüche 1 bis 15, **dadurch gekennzeichnet, dass** das Bild in Falschfarben der Unterzone ausgehend von einer Interpolation der Infrarotpixel erhalten ist, die zu dieser Unterzone gehören.

**17.** Vorrichtung zur Erfassung von Bildern nach einem der Ansprüche 1 bis 16, **dadurch gekennzeichnet, dass** die Infrarotfilter das Band 700nm bis 1100nm transmittieren.

**18.** Vorrichtung zur Erfassung von Bildern nach einem der Ansprüche 1 bis 16, **dadurch gekennzeichnet, dass** die Infrarotfilter das Band 700nm bis 1700nm transmittieren.

**Claims**

**1.** Image acquisition device comprising a sensor composed of an array of photosensitive elements called pixels, an array of elementary filters covering said sensor, each elementary filter being associated with a corresponding pixel, and processing means, **characterised in that**:

   - the elementary filter array comprises primary colour filters, where a primary colour filter only transmits one primary colour, filters transmitting the entire visible spectrum called panchromatic filters, and infrared filters transmitting the near infrared, the panchromatic filters representing at least 50% of said elementary filters;

processing means are designed to:

   - calculate an average luminance on a set of panchromatic pixels to determine if at least one sensor zone is under low or high illumination conditions;
   - if said zone is under low illumination conditions, form a monochrome image of said zone using the panchromatic pixels;
   - if said zone is under high illumination conditions, form a colour image of said zone using primary colour pixels and subtract an infrared image from said zone obtained from infrared pixels.

**2.** Image acquisition device according to claim 1, **characterised in that** the monochrome image of said zone is obtained by interpolation of panchromatic pixels forming part of this zone.

**3.** Image acquisition device according to claim 1, **characterised in that** the colour image of said zone is obtained by combination of primary colour images of said zone, a primary colour image being obtained by interpolation of primary colour pixels of said zone.

**4.** Image acquisition device according to claim 1, **characterised in that** the infrared image of said zone is obtained by interpolation of infrared pixels of said zone.

**5.** Image acquisition device according to one of the previous claims, **characterised in that** panchromatic filters represent at least 75% of the elementary filters.

**6.** Image acquisition device according to claim 5, **characterised in that** the elementary filter array is generated by two-dimensional periodic repetition of the following pattern:

$$F_{d\&n} = \begin{pmatrix} R & W & G & W \\ W & W & W & W \\ IR & W & B & W \\ W & W & W & W \end{pmatrix}$$

where *R, G, B* represent transmission filters in the red, the green and blue respectively, *IR* is an infrared filter and *W* is a panchromatic filter, the pattern being defined within one permutation of *R, G, B, IR*.

7.  Image acquisition device according to claim 5, **characterised in that** the elementary filter array is generated by two-dimensional periodic repetition of the following pattern:

$$F_{d\&n} = \begin{pmatrix} Ye & W & Ma & W \\ W & W & W & W \\ IR & W & Cy & W \\ W & W & W & W \end{pmatrix}$$

where *Ye, Ma, Cy* represent transmission filters in yellow, magenta and cyan respectively, *IR* is an infrared filter and *W* is a panchromatic filter, the pattern being defined within one permutation of *Ye, Ma, Cy, IR*.

8.  Image acquisition device according to one of claims 1 to 4, **characterised in that** the elementary filter array is generated by a two-dimensional periodic repetition of the following pattern:

$$F_{d\&n} = \begin{pmatrix} W & R & W & G \\ R & W & IR & W \\ W & G & W & B \\ IR & W & B & W \end{pmatrix}$$

where *R, G, B* represent transmission filters in the red, green and blue respectively, *IR* is an infrared filter and *W* is a panchromatic filter, the pattern being defined within one permutation of *R, G, B, IR*.

9.  Image acquisition device according to one of claims 1 to 4, **characterised in that** the elementary filter array is generated by a two-dimensional periodic repetition of the following pattern:

$$F_{d\&n} = \begin{pmatrix} W & Ye & W & Ma \\ Ye & W & IR & W \\ W & Ma & W & Cy \\ IR & W & Cy & W \end{pmatrix}$$

where *Ye, Ma, Cy* represent transmission filters in the yellow, magenta and cyan respectively, *IR* is an infrared filter and *W* is a panchromatic filter, the pattern being defined within one permutation of *Ye, Ma, Cy, IR*.

10. Image acquisition device according to one of the previous claims, **characterised in that** the processing means determine that said zone has low illumination if the average luminance on all panchromatic pixels in said zone is less than a first threshold and said zone has high illumination if the average luminance on all panchromatic pixels in said zone is higher than a second threshold, the second threshold being higher than the first threshold.

11. Image acquisition device according to claim 10, **characterised in that** if the average of the luminance on all panchromatic pixels in said zone is between the first and second thresholds, the processing means make a combination of the monochrome image and the colour image of said zone.

12. Image acquisition device according to one of the previous claims, **characterised in that** the sensor zone is the entire sensor, the processor means determine if the sensor is under low illumination or high illumination conditions.

13. Image acquisition device according to one of claims 1 to 11, **characterised in that** the monochrome image of the sensor is segmented into homogeneous regions and the processing means operate independently on each homogeneous zone of the sensor.

14. Image acquisition device according to one of the previous claims, **characterised in that** when a zone is under low illumination conditions, a test is performed to determine if the intensity of infrared pixels forming part of this zone is greater than a predetermined IR threshold, and if so, Infrared pixels represented in false colours are superposed with the monochrome image of this zone.

15. Image acquisition device according to one of claims 1 to 13, **characterised in that** when a zone is under low illumination conditions, sub-zones with homogeneous intensity in the infrared spectrum are identified in this zone, and for each sub-zone thus identified, it is determined if the average intensity of infrared in this sub-zone is greater than a predetermined IR threshold, and if so, this sub-zone is represented by a false colour image based on infrared pixels in this sub-zone, the false colour image of said sub-zone then being represented superposed with the monochrome image of the zone of which if forms part.

16. Image acquisition device according to one of claims 1 to 15, **characterised in that** the false colour image of said sub-zone is obtained by interpolation of the infrared pixels forming part of this sub-zone.

17. Image acquisition device according to one of claims 1 to 16, **characterised in that** the infrared filters transmit the 700nm-1100nm band.

18. Image acquisition device according to one of claims 1 to 16, **characterised in that** the infrared filters transmit the 700nm-1700nm band.

| G | R | G | R | G | R | G | R |
|---|---|---|---|---|---|---|---|
| B | G | B | G | B | G | B | G |
| G | R | G | R | G | R | G | R |
| B | G | B | G | B | G | B | G |
| G | R | G | R | G | R | G | R |
| B | G | B | G | B | G | B | G |
| G | R | G | R | G | R | G | R |
| B | G | B | G | B | G | B | G |

## Fig. 1

| W | B | W | G | W | B | W | G |
|---|---|---|---|---|---|---|---|
| B | W | G | W | B | W | G | W |
| W | G | W | R | W | G | W | R |
| G | W | R | W | G | W | R | W |
| W | B | W | G | W | B | W | G |
| B | W | G | W | B | W | G | W |
| W | G | W | R | W | G | W | R |
| G | W | R | W | G | W | R | W |

**Fig. 2**

| R | W | G | W | R | W | G | W |
|----|----|----|----|----|----|----|----|
| W | W | W | W | W | W | W | W |
| IR | W | B | W | IR | W | B | W |
| W | W | W | W | W | W | W | W |
| R | W | G | W | R | W | G | W |
| W | W | W | W | W | W | W | W |
| IR | W | B | W | IR | W | B | W |
| W | W | W | W | W | W | W | W |

**Fig. 3A**

| Ye | W | Ma | W | Ye | W | Ma | W |
|----|---|----|---|----|---|----|---|
| W | W | W | W | W | W | W | W |
| IR | W | Cy | W | IR | W | Cy | W |
| W | W | W | W | W | W | W | W |
| Ye | W | Ma | W | Ye | W | Ma | W |
| W | W | W | W | W | W | W | W |
| IR | W | Cy | W | IR | W | Cy | W |
| W | W | W | W | W | W | W | W |

## Fig. 3B

| W | R | W | G | W | R | W | G |
|---|---|---|---|---|---|---|---|
| R | W | IR | W | R | W | IR | W |
| W | G | W | B | W | G | W | B |
| IR | W | B | W | IR | W | B | W |
| W | R | W | G | W | R | W | G |
| R | W | IR | W | R | W | IR | W |
| W | G | W | B | W | G | W | B |
| IR | W | B | W | IR | W | B | W |

## Fig. 4A

| W | Ye | W | Ma | W | Ye | W | Ma |
|---|----|---|----|---|----|---|----|
| Ye | W | IR | W | Ye | W | IR | W |
| W | Ma | W | Cy | W | Ma | W | Cy |
| IR | W | Cy | W | IR | W | Cy | W |
| W | Ye | W | Ma | W | Ye | W | Ma |
| Ye | W | IR | W | Ye | W | IR | W |
| W | Ma | W | Cy | W | Ma | W | Cy |
| IR | W | Cy | W | IR | W | Cy | W |

## Fig. 4B

moyenne de la luminance $\bar{I}$
sur les pixels $W$ — 510

560

obtention d'une image monochrome
interpolation des pixels $W$

$\bar{I} > I_{th}$ ? — 520

N

Y

obtention des images de couleurs primaires
interpolation des pixels de chaque couleur primaire
$R, G, B$ ou $Ye, Ma, Cy$ — 530

obtention d'une image en proche infrarouge
interpolation des pixels IR — 540

obtention d'une image couleur à partir
des images de couleurs primaires
soustraction de l'image en proche infrarouge — 550

— 570

**Fig. 5**

## Fig. 6

obtention d'une image monochrome
interpolation des pixels $W$ — 603

segmentation de l'image monochrome
en régions homogènes $Z_p,\ p=1,...,P$ — 605

moyenne de la luminance $\overline{I}_p$
sur les pixels $W$ de chaque zone $Z_p$ — 610

$\overline{I}_p > I_{th}$ ? — 620

N

Y

obtention des images de couleurs primaires
pour chaque région $Z_p$ à fort éclairement
interpolation des pixels de chaque couleur primaire
$R,G,B$  ou  $Ye,Ma,Cy$ — 630

obtention d'une image en proche infrarouge
pour chaque région $Z_p$ à fort éclairement
interpolation des pixels IR — 640

pour chaque région $Z_p$ à fort éclairement
obtention d'une image couleur à partir
des images de couleurs primaires
soustraction de l'image en proche infrarouge — 650

substitution de l'image couleur
à l'image monochrome
pour les régions $Z_p$ à faible éclairement — 660

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 3971065 A
- WO 2007089416 A
- JP 2010062604 A
- US 2009159799 A
- US 2009009654 A

**Littérature non-brevet citée dans la description**

- **D. ALLEYSON et al.** Frequency selection demosaicking : a review and a look-ahead. *Proc. of IS&T/SPIE VCIP,* Janvier 2008
- **S. TRIPATHI et al.** Image Segmentation : a review. *International Journal of Computer Science and Management Research,* Novembre 2012, vol. 1 (4), 838-843